# EUROPÄISCHE PATENTSCHRIFT

(11) **EP 1 504 941 B1**
(45) Veröffentlichungstag und Bekanntmachung des Hinweises auf die Patenterteilung: **03.06.2009**
(21) Anmeldenummer: 04018309.7
(22) Anmeldetag: 03.08.2004
(51) Int. Cl.: B60J 7/02, B60J 7/057

(54) **Fahrzeugdach mit verschiebbarem Dachelement sowie Verfahren zum Kontaktieren eines verschiebbaren Dachelements**
Vehicle roof provided with a slidable roof element and method for contacting a slidable roof element
Toit de véhicule équipé avec un élément de toit coulissant et procédé pour contacter un élément de toit coulissant

(30) Priorität: 07.08.2003 DE 10336314
(43) Veröffentlichungstag der Anmeldung: 09.02.2005
(73) Patentinhaber: Webasto AG, 82131 Stockdorf (DE)
(72) Erfinder: Teschner, Helmut, 86899 Landsberg/Lech (DE); Kogler, Rupert, 80634 München (DE)

(56) Entgegenhaltungen:
- DE-A1- 4 038 039
- DE-A1- 19 813 324
- DE-C1- 19 650 227
- JP-A- 6 087 330

## Beschreibung

Die vorliegende Erfindung betrifft ein Fahrzeugdach gemäß dem Oberbegriff von Anspruch 1 sowie ein Verfahren zum Kontaktieren einer elektrischen Einrichtung in einem verschiebbaren Dachelement eines Fahrzeugdaches.

Ein gattungsgemäßes Fahrzeugdach ist beispielsweise in der DE 40 20 655 C1 beschrieben, wobei es sich bei der ersten elektrischen Einrichtung um eine Solarstromquelle und bei der zweiten elektrischen Einrichtung um einen Verbraucher handelt. Das erste Kontaktelement ist als mittels einer Feder vorgespannter Kontaktstößel ausgebildet, während das zweite Kontaktelement als von einem Kontaktträger gehaltenes Kontaktblech ausgebildet ist, das auf einer Auflaufschräge des Kontaktträgers aufliegt. Das Dachelement ist als Schiebedeckel ausgebildet, wobei der elektrische Kontakt in der Schließstellung des Deckels durch das Auflaufen des Metallstifts auf dem Kontaktblech auf der Auflaufschräge hergestellt wird. Bei einer anderen Ausführungsform ist der Kontaktträger als elastisch nachgiebiges Kunststoffgehäuse ausgebildet, das an seiner Oberseite mit zwei nebeneinander liegenden Kontaktflächen versehen ist, wobei beim Schließen des Deckels je ein an dem Deckel vorgesehener Kontaktstecker auf die beiden Kontaktflächen aufläuft.

Ähnliche Fahrzeugdächer sind beispielsweise in der DE 198 48 885 A1, der DE 198 13 324 A1 und der DE 199 37 220 C1 beschrieben.

Nachteilig bei einer solchen Art der Kontaktierung des verschiebbaren Dachelements mit dem Halterahmen ist, dass, falls sich das Dachelement in Betrieb elektrostatisch auflädt, weil beispielsweise ein Schiebehimmel unterhalb des Dachelements vorgesehen ist, die Entladung der elektrostatischen Ladung mit Spitzenspannungen von bis zu 12 kV über die Kontaktelemente erfolgen kann, was zu einer Zerstörung beispielsweise des Dachknotens bzw. eines elektrischen Antriebs des Dachelements führen kann.

Es ist Aufgabe der vorliegenden Erfindung, ein Fahrzeugdach mit einem verschiebbaren Dachelement mit einer elektrischen Einrichtung zu schaffen, bei welchem die Herstellung des elektrischen Kontakts zwischen der elektrischen Einrichtung des Dachelements und einer karosseriefesten Einrichtung in einer bestimmten Stellung des Dachelements möglichst zu keinen Zerstörungen durch die Entladung elektrostatischer Ladungen des Dachelements führt. Ferner soll ein entsprechendes Kontaktierungsverfahren geschaffen werden.

Diese Aufgabe wird erfindungsgemäß gelöst durch ein Fahrzeugdach gemäß Anspruch 1 sowie ein Verfahren gemäß Anspruch 15. Bei der erfindungsgemäßen Lösung ist vorteilhaft, dass dadurch, dass eines der beiden Kontaktelemente zwei hintereinander angeordnete Bereiche mit unterschiedlicher Leitfähigkeit aufweist, wobei bei der Herstellung des Kontakts das andere Kontaktelement zunächst mit dem Bereich mit der niedrigeren Leitfähigkeit und erst anschließend mit dem Bereich mit der höheren Leitfähigkeit in Kontakt kommt, eine definierte Ableitung einer etwaigen elektrostatischen Aufladung des Dachelements über den Bereich mit der niedrigeren Leitfähigkeit erfolgen kann, bevor der Kontakt mit dem Bereich mit der höheren Leitfähigkeit entsteht. Auf diese Weise kann eine unkontrollierte Entladung mit hohen Spitzenströmen weitgehend vermieden werden, so dass auch eine Zerstörung etwaiger elektrischer Antriebskomponenten des Dachelements bzw. eine Zerstörung des Dachknotens verhindert werden kann.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- Fig. 1: eine schematische Aufsicht auf ein erfindungsgemäßes Fahrzeugdach; und
- Fig. 2: eine perspektivische Detailansicht eines erfindungsgemäßen Kontaktelements.

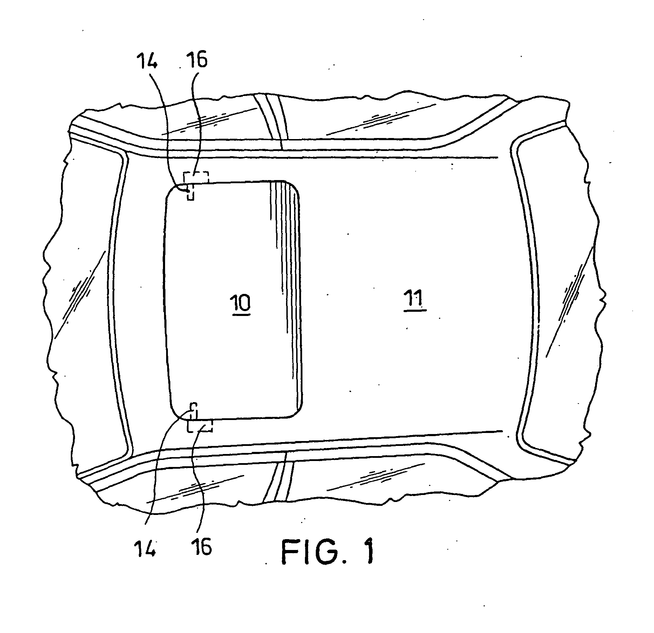

In Fig. 1 ist eine Aufsicht auf ein Fahrzeugdach gezeigt, wobei in einer festen Dachfläche 11 eine Dachöffnung 13 ausgebildet ist, welche in der Darstellung von Fig. 1 von einem Deckel 10 verschlossen ist, bei dem es sich beispielsweise um den Deckel eines Schiebedaches, Schiebehebedaches, Spoilerdaches oder außen geführten Schiebedaches handeln kann. Der Deckel 10 ist dabei in an sich bekannter Weise entlang eines karosseriefest montierten Halterahmens 12 in Dachlängsrichtung verschiebbar gelagert, wobei die Deckelmechanik je nach Dachtyp so ausgebildet sein kann, dass der Deckel 10, abgesehen von der Verschiebebewegung, auch eine Ausstellbewegung ausführen kann.

Der Deckel 10 ist mit einer ersten elektrischen Einrichtung versehen, bei der es sich vorzugsweise um einen Solargenerator handelt (in Fig. 1 nicht gezeigt). Die erste elektrische Einrichtung steht in elektrischer Verbindung mit je einem im vorderen Endbereich der rechten bzw. linken Seite des Deckels 10 angeordneten ersten Kontaktelements 14. Die beiden ersten Kontaktelemente 14 können beispielsweise als mittels einer Feder vorgespannte Kontaktstößel aus Metall ausgebildet sein, wie dies beispielsweise in der DE 40 20 655 C1 beschrieben ist. Bei der in Fig. 1 gezeigten Ausführungsform sind die beiden Kontaktstößel 14 in Dachquerrichtung beweglich und dabei jeweils nach außen vorgespannt.

Als Gegenstück für die beiden ersten Kontaktelemente 14, die am Deckel 10 angebracht sind, ist seitlich jeweils ein zweites Kontaktelement 16 vorgesehen, welches an dem Halterahmen 12 fest angebracht ist und in elektrischer Verbindung mit einer zweiten elektrischen Einrichtung steht, die karosseriefest montiert ist und bei welcher es sich beispielsweise um das Bordnetz des Fahrzeugs handeln kann, insbesondere um die Fahrzeugbatterie oder einen elektrischen Verbraucher, insbesondere des Fahrzeuglüfters, des Fahrzeugs.

Das Fahrzeugdach ist vorzugsweise so ausgebildet, dass die ersten und zweiten Kontaktelemente 14, 16 in der in Fig. 1 gezeigten Schließstellung des Deckels 10 den Kontakt zwischen der elektrischen Einrichtung des Deckels und der karosseriefesten elektrischen Einrichtung herstellen.

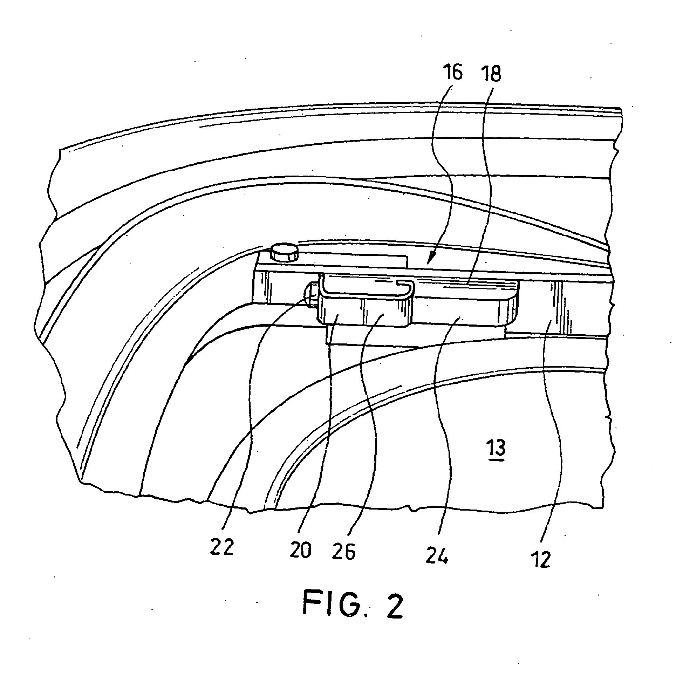

In Fig. 2 ist eine beispielhafte Ausgestaltung des rechten zweiten Kontaktelements 16 in vergrößerter Darstellung gezeigt. Das Kontaktelement 16 umfaßt dabei einen Kontaktträger 18, der vorzugsweise aus Kunststoff gefertigt ist und an dem Halterahmen 12 fest montiert ist und ein Kontaktblech 20 trägt, welches beispielsweise mittels einer Schraube 22 fest an dem Kontaktträger 18 angebracht ist. Das Kontaktblech 20 ist im vorderen Bereich des Kontaktträgers angeordnet und steht in elektrischer Verbindung mit der karosseriefest angeordneten zweiten elektrischen Einrichtung. An seinem hinteren Ende ist das Kontaktblech als Auflauframpe für den Kontaktstößel 14 ausgebildet.

Der hintere Teil (in der Darstellung von Fig. 2 der rechte Teil) des Kontaktträgers 18, der in Dachlängsrichtung gesehen hinter dem Kontaktblech 20 angeordnet ist, ist ebenfalls als Kontaktbereich für den Kontaktstößel 14 ausgebildet, wobei das hintere Ende ebenfalls als Auflauframpe für den Kontaktstößel 14 ausgebildet ist.

Auf diese Weise bildet das erste Kontaktelement 16 einen ersten Kontaktbereich 24, der von einem Teil des Kontaktträgers 18 gebildet wird, sowie einen zweiten Kontaktbereich 26, der von dem Kontaktblech 20 gebildet wird, wobei die beiden Bereiche 24, 26 in Dachlängsrichtung hintereinander liegend angeordnet sind, so dass beim Schließen des Deckels 10 (der sich dabei von hinten nach vorn bewegt) der Kontaktstößel 14 zunächst in Kontakt mit dem ersten Kontaktbereich 24 und erst danach in Kontakt mit den zweiten Kontaktbereich 26 kommt.

Der erste Kontaktbereich 24 ist vorzugsweise über den Halterahmen 12 an die Fahrzeugkarosserie auf Masse gelegt.

Die elektrische Leitfähigkeit des ersten Kontaktbereichs 24 ist niedriger als die Leitfähigkeit des zweiten Kontaktbereichs 26, wobei der Unterschied vorzugsweise mehrere Größenordnungen, beispielsweise mindestens 1.000-fach, 10.000-fach oder 100.000-fach, beträgt. Vorzugsweise beträgt dabei die Leitfähigkeit des ersten Kontaktbereichs 24 zwischen 10⁴ und 10⁹Ohm*cm (=Durchgangswiderstand).

Dadurch, dass die Leitfähigkeit des 1. Kontaktbereichs 24 wesentlich niedriger als diejenige des zweiten Kontaktbereichs 26 ist und der deckelfeste Kontakt 14 durch Schließen des Deckels zunächst in Kontakt mit dem ersten Kontaktbereich 24 kommt, kann eine kontrollierte Entladung etwaiger elektrostatischer Ladung auf dem Deckel 10 nach Masse erzielt werden, so dass dann, wenn der deckelfeste Kontakt 14 in Kontakt mit dem hoch leitfähigen zweiten Kontaktbereich 26 kommt, keine unkontrollierte Entladung elektrostatischer Ladung mit hohen Spitzenströmen mehr erfolgen kann, so dass die Fahrzeugelektronik, insbesondere der Dachknoten und der elektrische Antrieb des Deckels 10, vor Beschädigung bzw. Zerstörung geschützt werden können. Dabei kann insbesondere durch die gezielte Wahl der elektrischen Leitfähigkeit des Kontaktträgers 18 bzw. des ersten Kontaktbereichs 24 dieser Schutz für den jeweiligen spezifischen Anwendungsfall optimiert werden.

Besonders nützlich ist die erfindungsgemäße Ausgestaltung der Kontaktelemente dann, wenn unterhalb des Deckels 10 ein Schiebehimmel vorgesehen ist, da ein solcher Schiebehimmel zu einer starken elektrostatischen Aufladung des Deckels führen kann.

Es versteht sich, dass das linke erste Kontaktelement 16 in entsprechender Weise wie das beschriebene rechte erste Kontaktelement 16 ausgebildet sein kann.

Grundsätzlich kann die anhand der rahmenseitigen Kontaktelemente 16 beschriebene zweigeteilte Ausgestaltung mit zwei Bereichen unterschiedlicher Leitfähigkeit statt dessen für die deckelseitigen Kontaktelemente 14 vorgesehen sein, wobei in diesem Fall dann rahmenseitigen Kontaktelemente 16 beispielsweise als Kontaktstößel ausgebildet sein können.

### Bezugszeichenliste

- 10: Deckel
- 11: Dachfläche
- 12: Halterahmen
- 13: Dachöffnung
- 14: Kontaktstößel (erstes Kontaktelement)
- 16: zweites Kontaktelement
- 18: Kontaktträger
- 20: Kontaktblech
- 22: Schraube
- 24: erster Kontaktbereich
- 26: zweiter Kontaktbereich

## Patentansprüche

1. Fahrzeugdach mit einem in Dachlängsrichtung bezüglich eines karosseriefesten Halterahmens (12) verschiebbaren Dachelement (10) mit einer ersten elektrischen Einrichtung, die elektrisch mit einem ersten Kontaktelement (14) verbunden ist, wobei an dem Halterahmen ein zweites Kontaktelement (16) vorgesehen ist, welches elektrisch mit einer karosseriefesten zweiten elektrischen Einrichtung verbunden ist, wobei in mindestens einer ersten Stellung des Dachelements das erste Kontaktelement mit dem zweiten Kontaktelement eine elektrische Verbindung zwischen der ersten und der zweiten elektrischen Einrichtung herstellt, wobei eines der beiden Kontaktelemente einen ersten Bereich (24) und einen zweiten Bereich (26) aufweist, die in Dachlängsrichtung hintereinander angeordnet sind, wobei der zweite Bereich eine höhere Leitfähigkeit als der erste Bereich aufweist, **dadurch gekennzeichnet, dass** die beiden Kontaktelemente (14, 16) so ausgebildet sind, dass, wenn sich das Dachelement (10) der ersten Stellung nähert, zunächst ein elektrischer Kontakt des ersten Bereichs (24) mit dem anderen Kontaktelement (14) entsteht, bevor ein elektrischer Kontakt des zweiten Bereichs (26) mit dem anderen Kontaktelement entsteht.

2. Fahrzeugdach gemäß Anspruch 1, **dadurch gekennzeichnet, dass** der zweite Bereich (26) elektrisch mit der zweiten elektrischen Einrichtung verbunden ist und der erste Bereich (24) elektrisch mit Masse verbunden ist.

3. Fahrzeugdach gemäß Anspruch 1 oder 2, **dadurch gekennzeichnet, dass** die Leitfähigkeit des zweiten Bereichs (26) mindestens 100 000 mal höher als die Leitfähigkeit des ersten Bereichs (24) ist.

4. Fahrzeugdach gemäß einem der vorhergehenden Ansprüche, **dadurch gekennzeichnet, dass** die Leitfähigkeit des ersten Bereichs (24) zwischen 10⁴ und 10⁹ Ohm*cm beträgt.

5. Fahrzeugdach gemäß einem der vorhergehenden Ansprüche, **dadurch gekennzeichnet, dass** der zweite Bereich (26) aus Metall gefertigt ist.

6. Fahrzeugdach gemäß einem der vorhergehenden Ansprüche, **dadurch gekennzeichnet, dass** der erste Bereich (24) aus Kunststoff gefertigt ist.

7. Fahrzeugdach gemäß einem der vorhergehenden Ansprüche, **dadurch gekennzeichnet, dass** der erste Bereich (24) einen Teil eines Trägers (18) bildet, in welchem der zweite Bereich (26) gelagert ist.

8. Fahrzeugdach gemäß einem der vorhergehenden Ansprüche, **dadurch gekennzeichnet, dass** der erste und der zweite Bereich (24, 26) an dem zweiten Kontaktelement (16) ausgebildet sind.

9. Fahrzeugdach gemäß einem der vorhergehenden Ansprüche, **dadurch gekennzeichnet, dass** der erste Bereich (24) mit dem Halterahmen (12) elektrisch verbunden ist.

10. Fahrzeugdach gemäß einem der vorhergehenden Ansprüche, **dadurch gekennzeichnet, dass** der erste und/oder der zweite Bereich (24, 26) als Auflauframpe für das andere Kontaktelement (14) ausgebildet sind.

11. Fahrzeugdach gemäß einem der vorhergehenden Ansprüche, **dadurch gekennzeichnet, dass** es sich bei dem Dachelement um einen Deckel (10) für eine Dachöffnung (13) handelt, der Teil eines Schiebedaches, Schiebehebedaches, Spoilerdaches oder außen geführten Schiebedaches ist.

12. Fahrzeugdach gemäß einem der vorhergehenden Ansprüche, **dadurch gekennzeichnet, dass** es sich bei der ersten elektrischen Einrichtung um einen Solargenerator handelt.

13. Fahrzeugdach gemäß einem der vorhergehenden Ansprüche, **dadurch gekennzeichnet, dass** es sich bei der zweiten elektrischen Einrichtung um die Fahrzeugbatterie oder einen elektrischen Verbraucher des Bordnetzes handelt.

14. Fahrzeugdach gemäß einem der vorhergehenden Ansprüche, **dadurch gekennzeichnet, dass** ein Schiebehimmel unterhalb des Deckels (10) vorgesehen ist.

15. Verfahren zum Kontaktieren einer an einem in Dachlängsrichtung bezüglich eines karosseriefesten Halterahmens (12) eines Fahrzeugdaches verschiebbaren Dachelement (10) vorgesehenen ersten elektrischen Einrichtung, die elektrisch mit einem ersten Kontaktelement (14) verbunden ist, wobei an dem Halterahmen ein zweites Kontaktelement (16) vorgesehen ist, welches elektrisch mit einer karosseriefesten zweiten elektrischen Einrichtung verbunden ist, wobei in mindestens einer ersten Stellung des Dachelements über das erste Kontaktelement und das zweite Kontaktelement eine elektrische Verbindung zwischen der ersten und der zweiten elektrischen Einrichtung herstellt wird, wobei eines der beiden Kontaktelemente (16) einen ersten Bereich (24) und einen zweiten Bereich (26) aufweist, die in Dachlängsrichtung hintereinander angeordnet sind, wobei der zweite Bereich eine höhere Leitfähigkeit als der erste Bereich aufweist, **dadurch gekennzeichnet, dass**, wenn sich das Dachelement (10) der ersten Stellung nähert, zunächst ein elektrischer Kontakt des ersten Bereichs (24) mit dem anderen Kontaktelement (14) hergestellt wird, bevor ein elektrischer Kontakt des zweiten Bereichs (26) mit dem anderen Kontaktelement hergestellt wird.

## Claims

1. Vehicle roof with a roof element (10) which is slideable in the longitudinal direction of the roof with respect to a body-mounted retaining frame (12) and has a first electric device which is electrically connected to a first contact element (14), wherein a second contact element (16) is provided on the retaining frame, said second contact element being electrically connected to a body-mounted second electric device, wherein, in at least a first position of the roof element, the first contact element together with the second contact element produces an electric connection between the first and the second electric device, wherein one of the two contact elements has a first region (24) and a second region (26) which are arranged consecutively in the longitudinal direction of the roof, and wherein the second region has greater conductivity than the first region, **characterized in that** the two contact elements (14, 16) are designed in such a manner that, when the roof element (10) approaches the first position, first of all electric contact of the first region (24) with the other contact element (14) is made before electric contact of the second region (26) with the other contact element is made.

2. Vehicle roof according to Claim 1, **characterized in that** the second region (26) is electrically connected to the second electric device, and the first region (24) is electrically connected to earth.

3. Vehicle roof according to Claim 1 or 2, **characterized in that** the conductivity of the second region (26) is at least 100 000 times greater than the conductivity of the first region (24).

4. Vehicle roof according to one of the preceding claims, **characterized in that** the conductivity of the first region (24) is between 10⁴ and 10⁹ Ohm-cm.

5. Vehicle roof according to one of the preceding claims, **characterized in that** the second region (26) is manufactured from metal.

6. Vehicle roof according to one of the preceding claims, **characterized in that** the first region (24) is manufactured from plastic.

7. Vehicle roof according to one of the preceding claims, **characterized in that** the first region (24) forms part of a support (18) in which the second region (26) is mounted.

8. Vehicle roof according to one of the preceding claims, **characterized in that** the first and the second region (24, 26) are formed on the second contact element (16).

9. Vehicle roof according to one of the preceding claims, **characterized in that** the first region (24) is electrically connected to the retaining frame (12).

10. Vehicle roof according to one of the preceding claims, **characterized in that** the first and/or the second region (24, 26) are/is designed as a run-on ramp for the other contact element (14).

11. Vehicle roof according to one of the preceding claims, **characterized in that** the roof element is a cover (10) for a roof opening (13), which cover is part of a sliding roof, tilt-and-slide roof, spoiler roof or externally guided sliding roof.

12. Vehicle roof according to one of the preceding claims, **characterized in that** the first electric device is a solar generator.

13. Vehicle roof according to one of the preceding claims, **characterized in that** the second electric device is the vehicle battery or an electric consumer of the vehicle electric system.

14. Vehicle roof according to one of the preceding claims, **characterized in that** a sliding roof lining is provided below the cover (10).

15. Method for contacting a first electric device which is provided on a roof element (10) which is slideable in the longitudinal direction of the roof with respect to a body-mounted retaining frame (12) of a vehicle roof, which electric device is electrically connected to a first contact element (14), wherein a second contact element (16) is provided on the retaining frame, said second contact element being electrically connected to a body-mounted second electric device, wherein, in at least a first position of the roof element, an electric connection is produced between the first and the second electric device via the first contact element and the second contact element, wherein one of the two contact elements (16) has a first region (24) and a second region (26) which are arranged one behind the other in the longitudinal direction of the roof, and wherein the second region has greater conductivity than the first region, **characterized in that** when the roof element (10) approaches the first position, first of all the electric contact of the first region (24) with the other contact element (14) is produced before electric contact of the second region (26) with the other contact element is produced.

## Revendications

1. Toit de véhicule comprenant un élément de toit (10) pouvant coulisser dans la direction longitudinale du toit par rapport à un cadre de support (12) fixé à la carrosserie, avec un premier dispositif électrique qui est connecté électriquement à un premier élément de contact (14), un deuxième élément de contact (16) étant prévu sur le cadre de support et étant connecté électriquement à un deuxième dispositif électrique fixé à la carrosserie, le premier élément de contact, dans au moins une première position de l'élément de toit, créant avec le deuxième dispositif électrique une liaison électrique entre le premier et le deuxième dispositif électrique, l'un des deux éléments de contact présentant une première région (24) et une deuxième région (26), qui sont disposées l'une derrière l'autre dans la direction longitudinale du toit, la deuxième région présentant une plus grande conductibilité que la première région, **caractérisé en ce que** les deux éléments de contact (14, 16) sont réalisés de telle sorte que lorsque l'élément de toit (10) se rapproche de la première position, un contact électrique de la première région (24) avec l'autre élément de contact (14) se produise avant qu'un contact électrique de la deuxième région (26) avec l'autre élément de contact n'ait lieu.

2. Toit de véhicule selon la revendication 1, **caractérisé en ce que** la deuxième région (26) est connectée électriquement au deuxième dispositif électrique et la première région (24) est connectée électriquement à la masse.

3. Toit de véhicule selon la revendication 1 ou 2, **caractérisé en ce que** la conductibilité de la deuxième région (26) est au moins 100 000 plus élevée que la conductibilité de la première région (24).

4. Toit de véhicule selon l'une quelconque des revendications précédentes, **caractérisé en ce que** la conductibilité de la première région (24) est comprise entre 10⁴ et 10⁹ Ohm*cm.

5. Toit de véhicule selon l'une quelconque des revendications précédentes, **caractérisé en ce que** la deuxième région (26) est fabriquée en métal.

6. Toit de véhicule selon l'une quelconque des revendications précédentes, **caractérisé en ce que** la première région (24) est fabriquée en plastique.

7. Toit de véhicule selon l'une quelconque des revendications précédentes, **caractérisé en ce que** la première région (24) forme une partie d'un support (18), dans lequel est montée la deuxième région (26).

8. Toit de véhicule selon l'une quelconque des revendications précédentes, **caractérisé en ce que** la première et la deuxième région (24, 26) sont réalisées sur le deuxième élément de contact (16).

9. Toit de véhicule selon l'une quelconque des revendications précédentes, **caractérisé en ce que** la première région (24) est connectée électriquement au cadre de support (12).

10. Toit de véhicule selon l'une quelconque des revendications précédentes, **caractérisé en ce que** la première et/ou la deuxième région (24, 26) sont réalisées sous forme de rampe de montée pour l'autre élément de contact (14).

11. Toit de véhicule selon l'une quelconque des revendications précédentes, **caractérisé en ce que** l'élément de toit est un couvercle (10) pour une ouverture de toit (13), qui fait partie d'un toit ouvrant, d'un toit ouvrant coulissant et relevable, d'un toit de déflecteur ou d'un toit ouvrant guidé à l'extérieur.

12. Toit de véhicule selon l'une quelconque des revendications précédentes, **caractérisé en ce que** le premier dispositif électrique est un générateur solaire.

13. Toit de véhicule selon l'une quelconque des revendications précédentes, **caractérisé en ce que** le deuxième dispositif électrique est la batterie du véhicule ou un consommateur électrique du réseau de bord.

14. Toit de véhicule selon l'une quelconque des revendications précédentes, **caractérisé en ce qu'**il est prévu un store coulissant en dessous du couvercle (10).

15. Procédé pour la mise en contact d'un premier dispositif électrique prévu sur un élément de toit (10) pouvant coulisser dans la direction longitudinale du toit par rapport à un cadre de support (12) fixé à la carrosserie d'un toit de véhicule, qui est connecté électriquement à un premier élément de contact (14), un deuxième élément de contact (16) étant prévu sur le cadre de support, lequel est connecté électriquement à un deuxième dispositif électrique fixé à la carrosserie, et dans au moins une première position de l'élément de toit, une connexion électrique étant établie entre le premier et le deuxième dispositif électrique par le biais du premier élément de contact et du deuxième élément de contact, l'un des deux éléments de contact (16) présentant une première région (24) et une deuxième région (26), qui sont disposées l'une derrière l'autre dans la direction longitudinale du toit, la deuxième région présentant une conductibilité plus grande que la première région, **caractérisé en ce que** lorsque l'élément de toit (10) se rapproche de la première position, un contact électrique de la première région (24) avec l'autre élément de contact (14) est d'abord établi, avant qu'un contact électrique de la deuxième région (26) avec l'autre élément de contact soit établi.
